# EUROPEAN PATENT SPECIFICATION

(11) **EP 1 775 022 B1**
(45) Date of publication and mention of the grant of the patent: **27.01.2021**
(21) Application number: 06020487.2
(22) Date of filing: 28.09.2006
(51) Int. Cl.: B01J 21/02, B01J 21/10, B01J 23/00, B01J 23/755

(54) **PROCESS OF PRODUCING A CATALYTIC COATING AND CATALYST FILTERS**
VERFAHREN ZUR HERSTELLUNG VON EINE KATALYTISCHE BESCHICHTUNG UND EINER KATALYSATORFILTER
PROCÉDÉ DE FABRICATION D'UNE REVETEMENT CATALYTIQUE ET FILTRE CATALYSEUR

(30) Priority: 12.10.2005 EP 05022254
(43) Date of publication of application: 18.04.2007
(73) Proprietor: Center for Research and Technology-Hellas (CERTH), 57001 Thermi, Thessaloniki (GR)
(72) Inventor: Konstandopoulos, Athanasios G., Thessaloniki 54352 (GR); Böttcher, Jörg, 63500 Seligenstadt (DE)
(74) Representative: Köllner, Malte

(56) References cited:
- WO-A-01/34517
- US-A1- 2002 009 407
- US-A1- 2003 180 547
- US-A1- 2005 191 515
- US-B1- 6 679 938
- KARADIMITRA, K. ET AL.: "Ceria nanoparticle coated filters for soot emission control" INT, CONGRESS FOR PARTICLE TECHNOLOGY (PARTEC 2001), 2001, pages 1-7, XP009063644
- LOURENTZOU S. ET AL: "synthesis and deposition of nanoparticle catalyst on porous supports by aerosol routes" WORKSHOP OF CPERI (ADVANCED MATERIALS AND NANOTECHNOLOGY), 2004, pages 79-82, XP009063562

## Description

### Background of the Invention

### Field of the Invention

The present invention relates to a process of producing a catalytic coating on a porous filter support, particularly a multichannel filter support, which is suitable for the purification of particulate matter emitted from an internal combustion engine. A catalytic filter produced by the process according to the invention can e.g. be used as a particle multichannel filter for diesel engines.

### Description of the Related Art

An exhaust gas purifying multichannel filter is used to collect particulate matter emitted from an internal combustion engine and the particulate matter is removed by oxidation. Specifically, diesel fuel when burned in an internal combustion engine emits fine carbon particles such as soot which causes severe environmental problems.

It is known that coating the multichannel filter's surface(s) with a catalyst can promote oxidation of the carbon particulate matter using a catalytic reaction.

The exhaust gas purifying multichannel filters commonly used in automotive field are so-called honeycomb particulate multichannel filters which have regulated diameters of pores included in the surface of dividing walls of the honeycomb structural body made of ceramic. Such multichannel filters have been shown to improve the efficiency of capturing the particulate matter on the dividing wall surface.

In addition, diesel particulate multichannel filters (DPFs) have become more important to comply with particulate emission standards for diesel powered vehicles. The dominant geometric multichannel filter configuration is a honeycomb structural body comprising a wall-flow multi-channel structure with alternatively plugged channels where particle laden exhaust flow is multichannel filtered through porous walls and a soot deposit grows in the inlet channels.

Usually, the catalytic layer to be provided on the catalyst's surface(s) is formed by slurry impregnation in the following manner. A support powder such as Al₂O₃, ZrO₂, CeO₂, TiO₂ and SiO₂ is mixed with a binder component such as an aluminium salt and water to make a slurry. The resulting slurry is deposited on the catalyst walls. Thereafter, the deposited slurry is calcined to make a coating layer. Then, a catalytic ingredient is loaded on the coating layer.

Alternatively, a catalytic ingredient can be loaded on the support powder in advance. The resulting catalytic powder can be used to prepare a slurry. The thus prepared slurry can be used for a catalytic coating layer. In order to deposit a slurry on the walls, it is possible to employ the ordinary immersion method. The catalysts usually used are members of the platinum group metals (PGM). These materials have the effect of lowering the burning temperature of the particulate matter so as to make it easier to burn and improving the reactivity of the particulate matter through a catalytic reaction with NOx and the particulate matter.

Catalyst coatings made by slurry impregnation of catalyst bodies, however, have been shown to suffer from an increased backpressure due to clogging obstruction of pores, resulting in an increased fuel consumption. In addition, catalyst coatings containing noble metals such as platinum and palladium extremely increase the costs in catalyst production.

The publication by Karadimitra, K. et al: "Ceria nanoparticle coated filters for soot emission control", Int. Congress for Particle Technology (Partec 2001), 2001, pages 1-7, relates to the use of catalytic coated diesel particulate filters and discloses a technique for depositing the catalyst on specific filter substrates. This technique is using an aerosol containing at least one catalyst precursor salt or colloidal catalyst particles, thermally treating said aerosol droplets to produce nanoparticles.

The publication by Lourentzou, S. et al: "Synthesis and deposition of nanoparticle catalyst on porous supports by aerosol routes", Workshop of CPERI (Advanced Materials and Nanotechnology), 2004, pages 79-82, relates to catalytic coated diesel particulate filters and also incorporates the disclosure of the deposition method of Karadimitra.

Further, patent document US 2005/0191515 A1 discloses a method for homogeneous deposition of composites having very low coefficients of thermal expansion on the surface of a substrate. Because of their very low coefficients of thermal expansion these composites are particularly suitable for diesel particulate filter (DPF) application.

### Summary of the invention

The present invention has been made in consideration of the problems of the prior art described above. It is an object of the present invention to provide a cost-saving technique for depositing a catalyst material on a catalyst body such as a multichannel catalyst body providing an improved interaction between the catalyst particles deposited and the exhaust gas thereby increasing reactivity of the catalyst coating.

The present invention is directed to a process of producing a porous catalyst filter comprising depositing a porous catalytic coating on a porous filter support in such a way that the porous catalytic coating has a higher porosity than the porous catalyst filter, as called for in claim 1. Further aspects of the present invention can be found in the dependent claims.

It has been surprisingly found that a difference in porosity, i.e., the porous catalyst coating has a higher porosity than the wall of the porous catalyst filter, gives a two filters in series structure providing an improved interaction between the catalyst layer deposited and the exhaust gas thereby increasing reactivity of the catalyst coating.

The process of the present invention provides a catalytic coating comprising catalytic particles that are at least ten times smaller than catalyst particles deposited by conventional slurry impregnation. It has been shown that a catalyst filter coated according to the process of the present invention shows a high surface area due to the extremely small particle size of the catalyst deposited. The homogeneous distribution of the fine catalyst particles on the catalyst support surface provides an optimum contact with the exhaust gas. The high permeability positively affects the back pressure which will be lower, thus reducing the fuel consumption.

In addition, the process of the present invention provides cost-saving catalytic coatings by using predominantly catalytic materials other than expensive platinum and/or palladium. The high efficiency of the catalyst coated according to the present invention is independent from the use of noble metals as catalyst materials because the high flow and high loading capability is due of the extremely homogeneous catalyst particle distribution, with particle sizes being in nanometer ranges.

### Brief Description of the Drawings

The drawings of the figures are to illustrate the present invention.
- Fig. 1: shows an example of a hot wall aerosol reactor used to carry out the process of the invention.
- Fig. 2: is an SEM photograph of catalyst particles on a multichannel filter support deposited according to the process of the invention.
- Fig. 3: represents an SEM photograph of catalyst particles on a multichannel filter support deposited according to conventional slurry impregnation.

### Detailed Description of the present Invention

The porous catalyst coating is formed of particles which are nanoparticles. The nanoparticles are produced by an aerosol technique which will now be explained in detail.

Aerosolization is a technique for catalyst nanoparticle synthesis and in-situ deposition on a porous filter support. The formation of catalyst nanoparticles and deposition of said catalyst nanoparticles on the porous filter support is a continuous process that takes place in one step.

The process, however, may be theoretically divided into three stages. In the first stage, an aerosol comprising droplets containing catalyst precursor materials such as e.g. salts is generated. Next, as the second stage, the aerosol droplets are thermally treated thereby decomposing the catalyst precursor salts to produce catalyst particles. Subsequently, in a third stage, the catalyst nanoparticles are deposited on the porous filter support.

The process of the present invention is advantageously a three-dimensional coating process and is particularly applicable to a multichannel filter body of large size having segments of a diameter from 30 mm up to 5000 mm and a length from 10 mm up to 5000 mm.

In the process of the present invention, the catalyst nanoparticles formation and the catalyst nanoparticles deposition is carried out in an aerosol reactor which includes a distributor section that disperses the aerosol droplets in a desired, preferably homogeneous pattern before they enter the multichannel filter domain.

The homogeneous and uniform distribution of the synthesized catalytic particles among all of the channels of the multichannel filter is achieved by a suitably engineered multi-hole distributor that patterns the incoming aerosol particles flow in a manner analogous to the distribution of the many channels of the multichannel filter. The distributor may comprise many stages with different functionality including: classification of the droplets according to size, dispersion of droplets into the stream in any desired pattern including a homogeneous pattern before entering the multichannel filter domain.

According to the process of the present invention, the catalyst nanoparticles are highly disposed and deposited in a controlled fashion along the length of the channels on the barriers/walls of the porous filter support, such as a porous multichannel filter.

The controlled distribution of the catalytic particles along the axial direction of the multichannel filter is achieved by controlling the velocity of the aerosol in the range of 0.5 to 50 cm/s.

Formation of nanoparticle deposits inside the pore space of the filter wall occurs by Brownian diffusion and/or interception filtration mechanisms alone or in combination assisted by electrical fields and/or temperature driven transport (thermophoresis) using the resulting pressure drop to control the deposition process.

By controlling the coating of the catalyst at the axial direction along the filter channels, it is possible to improve the filtration efficiency of the multichannel filter as well as to reduce its pressure drop at the same time. This becomes possible because depositing more catalyst in the locations of high velocity results in a preferentially higher filtration efficiency at precisely the location where the filtration efficiency is smaller (high velocity causes lower collection of soot nanoparticles since the diffusive deposition mechanism becomes less effective). This is a feature unique to the present invention since it is not possible in the traditional slurry coating to improve the filtration efficiency without adverse effect on the pressure drop.

Backscatter analysis has confirmed that the deposition even reaches the bottoms of the pores of the multichannel filter support.

According to the process of the present invention, the catalyst nanoparticles are formed by generating an aerosol comprising droplets containing catalyst precursor salts or colloidal catalyst (precursor) particles, thermal treatment of the aerosol droplets and catalyst powder production.

The catalyst deposited is preferably a noble metal and/or an oxide selected from the group consisting of transition metals, lanthanides, actinides, mixed metals thereof and mixtures thereof.

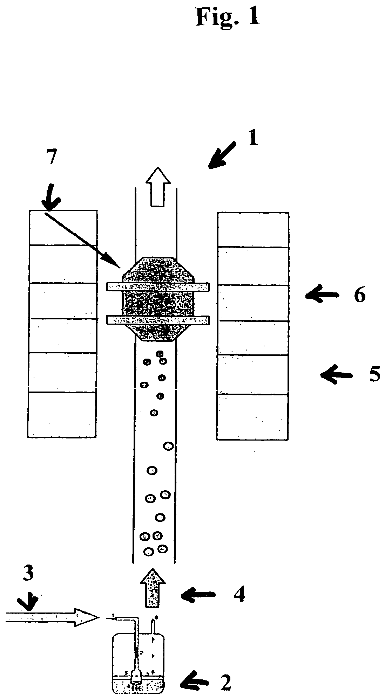

In the present invention the catalyst nanoparticle formation and the catalyst nanoparticle deposition is carried out in an aerosol reactor. An example of an aerosol reactor is a hot wall aerosol reactor which is shown in Fig. 1. The hot wall aerosol reactor 1 comprises a container 2 containing a solution of catalyst precursor salts. A carrier gas 3 is blown into the solution of catalyst precursor salts. By means of an atomizer (not shown) the solution of catalyst precursor salts is atomized into small droplets 4 which are introduced in the first heating zone 5 where the decomposition of the precursor salts takes place. In the second heating zone 6 the filter support 7 such as a multichannel filter support to be coated is disposed. In this second heating zone catalyst powder production occurs under simultaneously depositing catalyst nanoparticles on the multichannel filter support surfaces.

Alternatively, the droplets formed can contain colloidal catalyst precursor particles.

Said technique for catalyst nanoparticle synthesis and in-situ deposition on porous multichannel filter supports is hereby called Aerosol Spray Infiltration (ASI) as the aerosol is forced to flow into the many channels of the filter and then infiltrate any porous barrier/wall that exists before it emerges at the outlet side of the multichannel filter, having deposited the catalyst material within the entire. This process is applicable to any kind of porous multichannel filter supports. In a preferred embodiment of the present invention, honeycomb monolithic diesel particulate multichannel filters (DPF) are treated for catalytic applications.

The reactor is designed such that a catalyst multichannel filter coating is performed to achieve faster production of coated catalyst multichannel filters. It has been shown that a satisfactory catalyst load (in terms of mass loading) is provided in good uniformity.

For certain applications of catalytic multichannel filters, it can be advantageous to combine the process of the present invention with slurry impregnation. Alternatively, the solution that is aerosolized may contain not only dissolvable salts, but also colloidal particles.

The catalyst to be deposited can be a noble metal and/or an oxide selected from the group consisting of transition metals, lanthanides, actinides, mixed metals thereof and mixtures thereof. In a preferred embodiment of the present invention the catalyst deposited does not contain noble metals such as platinum or palladium or only less amounts thereof. An example of a suitable catalyst is ceria or an derivative thereof, e.g. in form of a mixed metal or mixture with other metal oxides. In addition, the metal oxide may be doped by another metal.

Usually, the particle size of the catalyst nanoparticles deposited is influenced by the concentration of the catalyst precursor salt solution. In addition, catalyst nanoparticle deposition depends on various process parameters, such as reactor temperature and precursor type.

In a further preferred embodiment of the present invention, the process of producing a catalytic coating on a porous multichannel filter support comprises the following steps:
- preparation of a solution containing at least one catalyst precursor salt;
- atomization of the catalyst precursor salt solution into aerosol droplets;
- dispersing the droplets in a desired pattern;
- heat treatment of the aerosol droplets in a first heating zone to decompose the catalyst precursor salts and
- deposition of catalyst nanoparticles on a porous multichannel filter support in a second heating zone.

If the catalyst to be deposited should be a mixed metal (oxide), the precursor solution contains at least two catalyst precursor salts.

Alternatively, the aerosol droplets contain colloidal catalyst particles.

In a preferred embodiment of the invention, the catalyst precursor solution is prepared by mixing organic and/or inorganic salts, colloidal particles or slurries of metals belonging to the transition elements, lanthanides and actinides, organic additives and promoters in an aqueous medium. If desired, a salt of a noble metal may be also admixed.

A further variant of the process of the present invention comprises the sequential deposition of the metal oxide (or mixed oxide) and the noble metal.

Usually, the anions of the organic and inorganic salts are selected from the group of nitrates, chlorides, carbonates acetates and oxalates. An example of an inorganic metal salt is cerium nitrate, optionally doped with another metal.

The well mixed catalyst precursor solution is atomized into droplets by an atomizer, usually an ultrasonic or an air-assisted atomizer, but also direct-feed liquid pressure or electrostatic atomizers (including electrosprays) may be employed. The precursor salt(s), colloidal catalyst or catalyst slurry containing droplets form a chemical aerosol feed which is transported into the first reaction zone of the aerosol reactor by a carrier gas blown into the catalyst precursor salt solution. The carrier gas should have a controlled composition, with an oxidative or reducing effect.

Inside the reaction zone of the aerosol reactor the precursor(s) decompose(s) to the corresponding metal oxide(s). This decomposition occurs in the first heating zone of the reactor where the temperature is kept in the range of 100 to 500 °C. In the second heating zone catalyst powder in form of catalyst nanoparticles is produced at temperature conditions in the range of 400 to 1.500°C. The catalyst nanoparticle powder is then deposited on the porous multichannel filter support arranged in said second heating zone. Alternatively, a higher number of heating zones may be employed to achieve any desired temperature profile along the aerosol reactor axis from 100 to 1.500 °C.

The catalyst nanoparticles are deposited on the surface of the porous multichannel filter support in a range of 0.5 to 100.00 g/m² (mass loading). Preferably, the range is 5.00 to 35.00 g/m², particularly preferred 12.00 to 30.00 g/m². The mass loading is particularly important for the efficiency of the coating and depends on the catalyst to be deposited.

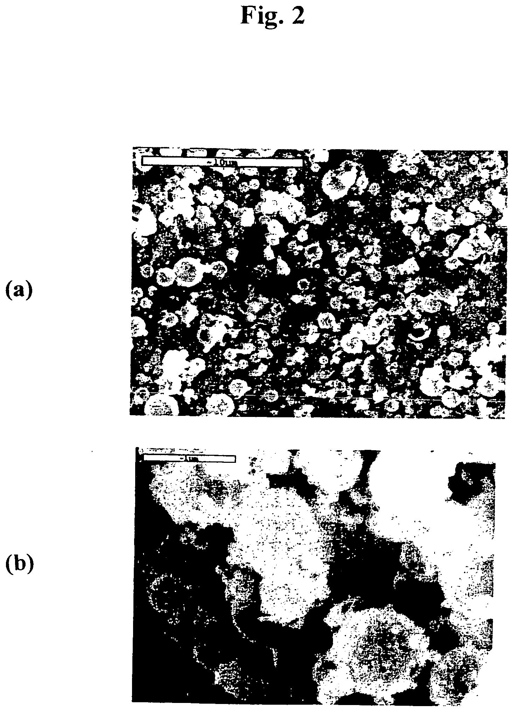

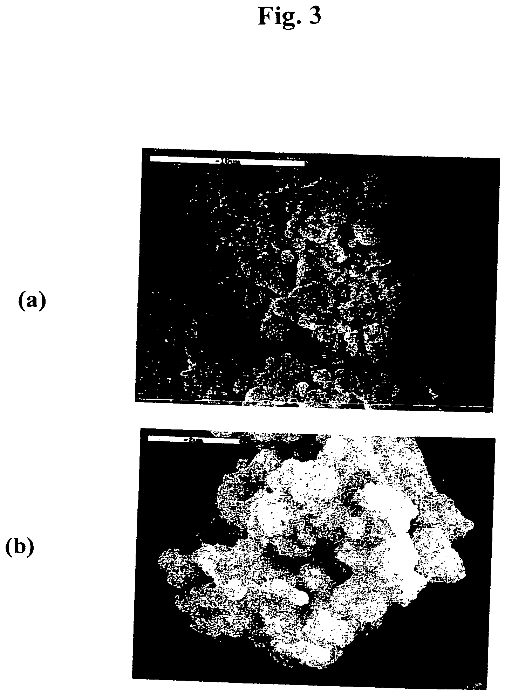

The size of the catalyst nanoparticles deposited is in the range of 50 to 2000 nm depending on the kind of catalyst used. A range of 200 to 400 nm is preferred. Fig. 2 shows a SEM photograph of catalyst particles on a multichannel filter support deposited according to the process of the invention. The catalyst deposited forms a homogeneous coating of finely distributed catalyst nanoparticles covering the multichannel filter support including the pores. In contrast thereto, a catalyst deposited according to conventional slurry impregnation is present in clusters providing an inhomogeneous distribution of catalyst particles on the multichannel filter support as shown in Fig. 3. Cluster formation inevitably results in plugging the support pores which affects multichannel filter efficiency.

The porous filter support such as a multichannel filter support can be of any material and is preferably made of any high temperature ceramic such as but not limited to cordierite, silicon carbide, silicon nitride, SiAlON, mullite, aluminium titanate and so on, or any high temperature metal or metal alloy such as but not limited to Nickel, Nichrome, Fecralloy®, Inconel®, Hastalloy® and so on or any high temperature fibrous material such as Nextel®, aluminosilicate, alumina, titania, and so on. Combinations or mixtures of the above materials to make porous filter supports are also covered within the scope of the present invention. In a particularly preferred embodiment the multichannel filter support is a honeycomb structural body made of any of the above materials.

As an example useful for understanding the invention, a catalytic filter produced by the above process will be described in what follows. The catalytic filter comprises a porous filter support and a catalytic coating deposited thereon wherein the porous catalytic coating has a higher porosity than the porous filter support. The catalyst coating comprises catalyst particles having a particle size of 50 to 2000 nm, preferably 200 to 400 nm. The mass loading of the catalyst particles on the catalyst filter surface is in the range of 0.5 to 100.00 g/m², preferably 5.00 to 35 g/m², particularly preferred 12.00 to 30.00 g/m². The catalyst material can be any material suitable for catalyst filter surface. For example, the catalyst materials mentioned above, can be used.

In a preferred embodiment of the invention, the porosity of the porous catalyst coating is increased by 15 to 150%, preferably 50 to 80% compared to the porous filter support.

As an example useful for understanding the invention, a catalytic filter produced by the process according to the invention can be a porous multichannel filter support of a honeycomb structural body which can be efficiently used to remove particulate matter emitted from internal combustion engines. The particulate matter is soot, e.g., which is emitted from a diesel internal combustion engine.

In a further preferred embodiment of the invention the porous multichannel filter support is a honeycomb structural body having a multichannel structure with alternatively plugged channels where particle laden exhaust flow is multichannel filtered through porous walls and a soot deposit grows in the inlet channel.

A catalyst filter produced by the process according to the invention shows an excellent performance in particular when used as a diesel particulate (multichannel) filter (DPF). Particulate matter such as soot particles emitted from a diesel internal combustion engine is sufficiently removed. The particulate fine carbon particles are completely oxidized. Material tests with a porous multichannel filter support material of 11/42 (µm pore size/porosity) have shown that even though the catalyst coating is deposited as a cake layer, it still shows a high surface area due to the finely distributed, homogeneous catalyst particles. Moreover, the coating stays on the multichannel filter support and cannot be removed therefrom e.g. by shaking.

Material tests with multichannel filter supports of a material of 20/60 (µm pore size/porosity) confirm that the distribution of the catalyst nanopowder is absolutely homogeneous with a catalyst deposition also inside the pores, in addition to a fine layer on the multichannel filter's surface. This has been also confirmed by backscatter image experiments.

When using a honeycomb multichannel filter for providing same with a catalytic coating produced according to the present invention, a so-called spatial modulated coating may be applied, i.e., different catalysts in and along the inlet and outlet channels may be deposited using the present aerosol spray pyrolysis process.

It has been shown in soot loading experiments carried out with catalysts according to the present invention that the back pressure is significantly reduced when a soot layer is present, i.e. when the catalyst multichannel filter is loaded with carbon-based particles. At the same time these filters show an increased filtration efficiency (98%) versus that of conventionally slurry coated filter with the same catalyst load, which do not show improvements in filtration efficiency.

In addition, soot loaded catalyzed multichannel filter regeneration experiments have revealed that the catalyzed multichannel filters produced by the process according to the present invention show an increased reactivity and a decreased soot oxidation/reaction temperature. In addition, the CO content is significantly selectively reduced.

Finally, the full potential of the coating technology of the present invention can be seen by means of the oxidation activity. It has been shown with multichannel filters having a catalyst load of 14 g/m² that the oxidation reaction of the carbon particles occurs at lower temperature and is much quicker than it is the case with conventionally slurry impregnated coated catalysts of the same composition.

The process of the present invention as well as catalyst filters produced by this process have excellent performance when used to remove particulate matter emitted from internal combustion engines. It has been shown that the reaction rate is at least 40% higher than it is the case with conventionally slurry coated catalyst filters with the same composition. The regeneration temperature is always lower while the CO selectivity is at least 20% better and the back pressure is lower and more linear.

## Claims

1. A process for producing a porous catalyst filter, the process comprising the steps of:
- generating an aerosol in an aerosol reactor having a distributor section, wherein said aerosol contains aerosol droplets, and wherein said aerosol droplets contain at least one catalyst precursor salt or colloidal catalyst particles, wherein said distributor section includes a multi-hole pattern for dispersing said aerosol droplets in a desired, preferably homogeneous, pattern before said aerosol droplets enter a porous multichannel filter support;
- thermally treating said aerosol droplets in a first heating zone of said aerosol reactor for decomposing said at least one catalyst precursor salt or said colloidal catalyst particles, wherein said aerosol droplets are transported into said first heating zone by a carrier gas, and wherein the temperature in said first heating zone is 100 to 500°C; and
- infiltrating and depositing catalyst nanoparticles in a second or additional heating zone(s) of said aerosol reactor, wherein the temperature in said second or additional heating zone(s) is 400 to 1500°C, on said porous multichannel filter support, wherein said infiltrating includes forcing said aerosol to flow into channels of said porous multichannel filter support, and infiltrating any porous barrier/wall of said porous multichannel filter support before emerging at the outlet side of said porous multichannel filter support, wherein said depositing includes depositing said catalyst nanoparticles on the walls of said porous multichannel filter support to form a porous catalytic coating in a highly dispersed and controlled fashion, wherein said highly dispersed and controlled fashion includes said aerosol having a velocity from 0.5 to 50 cm/s along the axial direction of said porous multichannel filter support, wherein said depositing is performed on the surface of said porous multichannel filter support at a mass loading in a range of 0.5 to 100.00 g/m², wherein said catalyst nanoparticles have a size in the range of 50 to 2000 nm, wherein said porous multichannel filter support is a honeycomb particulate multichannel filter having a wall-flow multi-channel structure with alternatively plugged channels in which a particle-laden exhaust flow can be multichannel filtered through porous walls in which a soot deposit can grow in inlet channels, wherein said porous catalytic coating has a structure with a higher porosity than the walls of said porous multichannel filter support as can be confirmed by backscatter analysis, and wherein said catalyst nanoparticles are homogenously and finely distributed in forming said porous catalytic coating, covering said porous multichannel filter support and its pores as can be determined by SEM analysis.

2. The process according to claim 1, wherein said depositing includes depositing said catalyst nanoparticles that are noble metals and/or oxides selected from the group consisting of: transition metals, lanthanides, actinides, mixed metals thereof, and mixtures thereof.

3. The process according to any one of claims 1 or 2, the process further comprising the steps:
- preparing a solution containing said at least one catalyst precursor salt or said colloidal catalyst particles; and
- atomizing said solution into said aerosol droplets.

4. The process according to claim 3, wherein said solution is prepared by mixing organic and/or inorganic salts or colloidal catalyst particles of metals, belonging to the transition elements, lanthanides, and actinides, organic additives, and promoters in an aqueous medium.

5. The process according to claim 4, wherein the anions of said organic and said inorganic salts or said colloidal catalyst particles of metals are selected from the group consisting of: nitrates, chlorides, carbonates, acetates, and oxalates.

6. The process according to any one of claims 1 to 5, wherein said step of generating includes forming said aerosol droplets from said solution by an ultrasonic or electrostatic atomizer.

7. The process according to any one of claims 1 to 6, wherein said range is 5.00 to 35.00 g/m².

8. The process according to any one of claims 1 to 7, wherein said range is 12.00 to 30.00 g/m².

9. The process according to any one of claims 1 to 8, wherein said porous multichannel filter support is made of a high-temperature ceramic metal, metal alloy, fibrous material, or combinations thereof.

## Patentansprüche

1. Verfahren zur Herstellung eines porösen Katalysatorfilters mit folgendem Schritten:
- Erzeugen eines Aerosols in einem Aerosolreaktor mit einem Verteilerabschnitt, wobei das Aerosol Aerosoltröpfchen enthält und wobei die Aerosoltröpfchen mindestens ein Katalysatorpräkursorsalz oder kolloidale Katalysatorpartikel enthalten, wobei der Verteilerabschnitt ein Mehrlochmuster aufweist, das Aerosoltröpfchen in einem bevorzugten, vorzugsweise homogenen Muster vor dem Eintritt der Aerosoltröpfchen in einen porösen Mehrkanal-Filterträger dispergiert;
- thermische Behandlung der Aerosoltröpfchen in einer ersten Heizzone des Aerosolreaktors zur Zersetzung des mindestens einen Katalysatorpräkursorsalzes oder der kolloidalen Katalysatorteilchen, wobei die Aerosoltröpfchen durch ein Trägergas in die erste Heizzone transportiert werden und wobei die Temperatur in der ersten Heizzone 100 bis 500 °C beträgt;
- Eindringen und Abscheiden von Katalysator-Nanopartikeln in einer zweiten oder zusätzlichen Heizzone(n) des Aerosolreaktors, wobei die Temperatur in der zweiten oder zusätzlichen Heizzone(n) 400 bis 1500 °C beträgt, ebenso auf dem porösen Mehrkanal-Filterträger, wo das Eindringen des Aerosols in die Kanäle des porösen Mehrkanalfilterträgers und das Eindringen in jede poröse Barriere/Wand des porösen Mehrkanal-Filterträgers erzwungen wird, bevor es zu einem Austritt an der Auslassseite des porösen Mehrkanalfilterträgers kommt, wobei das Abscheiden der Katalysator-Nanopartikel das Abscheiden an den Wänden des porösen Mehrkanal-Filterträgers umfasst, um eine poröse katalytische Beschichtung in einer hochdispergierten und kontrollierten Weise zu bilden, wobei die Bildung in hochdispergierter und kontrollierter Weise Aerosol mit einer Geschwindigkeit von 0,5 bis 50 cm/s entlang der axialen Richtung des porösen Mehrkanal-Filterträgers einschließt, wobei die Abscheidung auf der Oberfläche des porösen Mehrkanal-Filterträgers bei einer Massenbeladung in einem Bereich von 0,5 bis 100 g/m² durchgeführt wird, wobei die Katalysator-Nanopartikel eine Größe im Bereich von 50 bis 2000 nm aufweisen, wobei der poröse Mehrkanal-Filterträger ein wabenförmiger Partikel-Mehrkanal-Filter mit einer Wandstrom-Mehrkanalstruktur mit abwechselnd verstopften Kanälen ist, in denen ein partikelbeladener Abgasstrom durch poröse Wände, in denen eine Rußablagerung in Einlasskanälen wachsen kann, mehrkanalig gefiltert werden kann, wobei die poröse katalytische Beschichtung eine Struktur mit einer höheren Porosität als die Wände des porösen Mehrkanal-Filterträgers aufweist, wie durch Rückstreuanalyse bestätigt werden kann und wobei die Katalysator-Nanopartikel bei der Bildung der porösen katalytischen Beschichtung homogen und fein verteilt sind und den porösen Mehrkanal-Filterträger und seine Poren bedecken, wie durch REM-Analyse bestimmt werden kann.

2. Verfahren nach Anspruch 1, wobei die Abscheidung der Katalystor-Nanopartikel eine Abscheidung von Katalysator-Nanopartikeln umfasst, die Edelmetalle und/oder Oxide sind, die in folgender Gruppe enthalten sind: Übergangselemente, Lanthanoide, Actinoide, sowie Legierungen und Mischungen aus diesen.

3. Verfahren nach einem der Ansprüche 1 oder 2, wobei der Prozess weiterhin die Schritte umfasst:
- Herstellen einer Lösung, die das mindestens eine Katalysatorpräkursorsalz oder die kolloidalen Katalysatorteilchen enthält; und
- Zerstäuben der Lösung in die Aerosoltröpfchen.

4. Verfahren nach Anspruch 3, wobei die Lösung durch Mischen von organischen und/oder anorganischen Salzen oder kolloidalen Katalysatorteilchen von Metallen, organischen Additiven und Promotoren in einem wässrigen Medium hergestellt wird, wobei die Metalle in folgender Gruppe enthalten sind: Übergangselemente, Lanthanoide und Actinoide.

5. Verfahren nach Anspruch 4, wobei die Anionen der organischen und der anorganischen Salze oder der kolloidalen Katalysatorteilchen von Metallen in folgender Gruppe enthalten sind: Nitrate, Chloride, Carbonate, Acetate und Oxalate.

6. Verfahren nach einem der Ansprüche 1 bis 5, wobei der Schritt des Erzeugens die Bildung der Aerosoltröpfchen aus der Lösung durch einen Ultraschall- oder elektrostatischen Zerstäuber einschließt.

7. Verfahren nach einem der Ansprüche 1 bis 6, wobei der Bereich der Massenbeladung 5,00 bis 35,00 g/m² beträgt.

8. Verfahren nach einem der Ansprüche 1 bis 7, wobei der Bereich der Massenbeladung 12,00 bis 30,00 g/m² beträgt.

9. Verfahren nach einem der Ansprüche 1 bis 8, wobei der poröse Mehrkanal-Filterträger aus einer Hochtemperatur-Keramik einem Metall, einer Metalllegierung, einem Fasermaterial oder Kombinationen daraus hergestellt ist.

## Revendications

1. Un procédé de production d'un filtre catalytique poreux, le procédé comprenant les étapes suivantes
- génération d'un aérosol dans un réacteur d'aérosol ayant une section de distribution, dans lequel ledit aérosol contient des gouttelettes d'aérosol, et dans lequel lesdites gouttelettes d'aérosol contiennent au moins un sel précurseur de catalyseur ou des particules colloïdales de catalyseur, dans lequel ladite section de distribution comprend un motif à plusieurs trous pour disperser lesdites gouttelettes d'aérosol dans un motif souhaité, de préférence homogène, avant que lesdites gouttelettes d'aérosol n'entrent dans un support de filtre multicanaux poreux ;
- traiter thermiquement lesdites gouttelettes d'aérosol dans une première zone de chauffage dudit réacteur d'aérosol pour décomposer ledit au moins un sel précurseur de catalyseur ou lesdites particules colloïdales de catalyseur, dans lequel lesdites gouttelettes d'aérosol sont transportées dans ladite première zone de chauffage par un gaz porteur, et dans lequel la température dans ladite première zone de chauffage est de 100 à 500°C ; et
- l'infiltration et le dépôt de nanoparticules de catalyseur dans une deuxième zone ou des zones de chauffage supplémentaires dudit réacteur d'aérosol, dans lequel la température dans ladite deuxième zone ou lesdites zones de chauffage supplémentaires est de 400 à 1500°C, sur ledit support de filtre multicanaux poreux, dans lequel ladite infiltration comprend le fait de forcer ledit aérosol à s'écouler dans des canaux dudit support de filtre multicanaux poreux, et infiltrer toute barrière/paroi poreuse dudit support de filtre multicanaux poreux avant d'émerger du côté de la sortie dudit support de filtre multicanaux poreux, dans lequel ledit dépôt comprend le dépôt desdites nanoparticules de catalyseur sur les parois dudit support de filtre multicanaux poreux pour former un revêtement catalytique poreux d'une manière hautement dispersée et contrôlée, dans lequel ladite manière hautement dispersée et contrôlée comprend ledit aérosol ayant une vitesse de 0,5 à 50 cm/s dans la direction axiale dudit support de filtre multicanaux poreux, dans lequel ledit dépôt est effectué sur la surface dudit support de filtre multicanaux poreux à une charge de masse dans une plage de 0,5 à 100,00 g/m2, dans lequel lesdites nanoparticules de catalyseur ont une taille dans la plage de 50 à 2000 nm, dans lequel ledit support de filtre multicanaux poreux est un filtre multicanaux de particules en nid d'abeille ayant une structure multicanaux à écoulement par les parois avec des canaux alternativement bouchés dans lesquels un écoulement d'échappement chargé de particules peut être filtré de manière multicanaux à travers des parois poreuses dans lesquelles un dépôt de suie peut se développer dans les canaux d'entrée, dans lequel ledit revêtement catalytique poreux a une structure avec une porosité plus élevée que les parois dudit support de filtre multicanaux poreux comme peut être confirmé par une analyse de rétrodiffusion, et dans lequel lesdites nanoparticules de catalyseur sont distribuées de manière homogène et fine en formant ledit revêtement catalytique poreux, couvrant ledit support de filtre multicanaux poreux et ses pores comme peut être déterminé par une analyse MEB.

2. Le procédé selon la revendication 1, dans lequel ledit dépôt comprend le dépôt desdites nanoparticules de catalyseur qui sont des métaux et/ou des oxydes nobles choisis dans le groupe constitué par : les métaux de transition, les lanthanides, les actinides, les métaux mixtes de ceux-ci, et les mélanges de ceux-ci.

3. Le procédé selon l'une quelconque des revendications 1 ou 2, le procédé comprenant en outre les étapes suivantes
- préparer une solution contenant ledit au moins un sel précurseur de catalyseur ou lesdites particules colloïdales de catalyseur ; et
- atomiser ladite solution dans lesdites gouttelettes d'aérosol.

4. Le procédé selon la revendication 3, dans lequel ladite solution est préparée en mélangeant des sels organiques et/ou inorganiques ou des particules de catalyseur colloïdal de métaux, appartenant aux éléments de transition, lanthanides et actinides, des additifs organiques et des promoteurs dans un milieu aqueux.

5. Le procédé selon la revendication 4, dans lequel les anions desdits sels organiques et inorganiques ou desdites particules colloïdales de catalyseur de métaux sont choisis dans le groupe constitué par : les nitrates, les chlorures, les carbonates, les acétates et les oxalates.

6. Le procédé selon l'une quelconque des revendications 1 à 5, dans lequel ladite étape de génération comprend la formation desdites gouttelettes d'aérosol à partir de ladite solution par un atomiseur ultrasonique ou électrostatique.

7. Le procédé selon l'une quelconque des revendications 1 à 6, dans lequel ladite plage est de 5,00 à 35,00 g/m2.

8. Le procédé selon l'une quelconque des revendications 1 à 7, dans lequel ladite plage est de 12,00 à 30,00 g/m2.

9. Le procédé selon l'une quelconque des revendications 1 à 8, dans lequel ledit support de filtre multicanaux poreux est constitué d'une céramique d'un métal, d'un alliage métallique, d'un matériau fibreux à haute température ou de combinaisons de ceux-ci.
